# EUROPEAN PATENT APPLICATION

(11) **EP 0 712 900 A2**
(43) Date of publication of application: **22.05.1996**
(21) Application number: 95308199.9
(22) Date of filing: 16.11.1995
(51) Int. Cl.: C08L 67/02

(54) **Reduction of plateout in crystallizable poly(ethylene terephthalate) blends**

(30) Priority: 18.11.1994 FR 9413854
(71) Applicant: ROHM AND HAAS COMPANY, Philadelphia, Pennsylvania 19106-2399 (US)
(72) Inventor: Diaz, Thierry C.C., F-06330 Roquefort Les Pins (FR); Lai, Choung-Houng, Newtown, Pennsylvania 18940 (US); Watt, Ian Martin, East Grinstead, West Sussex RH19 3YQ (GB)
(74) Representative: Angell, David Whilton

(57) **Abstract**

Rapidly crystallizing blends of poly(ethylene terephthalate) modified with multi-stage impact modifiers, polycarbonate, and linear low density polyethylene are attractive molding compositions, but may suffer from plateout of additives upon re-processing of regrind. Low levels of hindered phenol antioxidants or sulfur-containing esters, added to the blend, are effective in reducing plate-out without affecting nucleation or mold release.

## Description

This invention is concerned with polyesters, such as poly(ethylene terephthalate), modified with impact modifiers, mould release agents, and nucleating agents, which exhibit improved resistance to plate-out on injection moulding or extrusion.

Polymers and copolymers containing predominantly units derived from ethylene glycol and terephthalic acid, which we shall designate PET, when properly formulated, are attractive candidates for many packaging operations. One major aspect is in clear formulations where the polyester remains amorphous, such as in the packaging of water, carbonated beverages, and the like. A second aspect is when the polyester is crystallized, so as to attain a heat stability without distortion up to temperatures above 230 degrees C. The crystalline polymers in a practical aspect require one or more additives for improvement of impact strength, an additive to improve mould release or release from any contact with metal surfaces, and one or more additives known as "nucleating agents" which will control the rate and degree of crystallization during the moulding process.

One solution to this problem has been offered by Carson, U.S. Patent 4,713,268, where he teaches an acrylic core/shell impact modifier, suitably heat-stabilized, a small amount of polycarbonate, and a second poly(alkylene terephthalate), preferably where the alkylene group is butylene, as a nucleator. Another formulation which offers lower cost is the use of a polyolefin, such as linear low density polyethylene (LLDPE), as a nucleating component of polyester blends (as taught in Gartland et al,. U.S. Patent 4,463,121 and European Patent 104,130-B). The polyolefin is also useful as a mould release agent; it is generally less effective as a nucleator than inorganic nucleators, such as talc.

When a polyolefin, such as LLDPE, is employed in combination with a mixture of polycarbonate and an acrylic core/shell modifier or butadiene rubber based core/shell modifier, under certain conditions of moulding, such as extended runs or attempts to increase production rates by use of higher temperatures and faster mould cycles, the LLDPE will "plate-out", necessitating stopping or slowing the moulding process to remove the separated polyolefin. A similar result is seen when such a formulation is extruded into sheet and then thermoformed into appropriate packaging articles. Plate-out is manifested by unattractive, dull surfaces, appearance of a film of polyolefin at the thermoforming rolls, or a slippery feel to the surface of the formed article. One solution, taught in Lai et al., U. S. Patent 5,322,663 is the replacement of LLDPE with a copolymer of ethylene and a vinyl or vinylidene monomer containing ester groups, such as a (meth)acrylate ester, such as an ethylene/methyl acrylate (E/MA) or ethylene/ ethyl acrylate (E/EA) copolymer, or a vinyl alkanoate, such as vinyl acetate, which drastically reduces plate-out from the blend. However, these ethylene copolymers are more expensive than the LLDPE, and thus are not a wholly satisfactory solution to the "plate-out" problem.

We have now found that "plate-out" is greatly reduced in processing a blend of PET with a core/shell impact modifier, optionally an inorganic nucleating agent, a low level of polycarbonate, and linear low density polyethylene, by adding to the blend an appropriate amount of a thermal stabilizer or antioxidant for the polyolefin, preferably a hindered phenol antioxidant, at a level substantially higher than is present in the commercial LLDPE or in the other components of the blend. More specifically, we have discovered a rapid-crystallizing, modified polyester resin composition exhibiting low plate-out on repeated thermal processing, comprising:
a. from 70 to 94 % of the total blend, preferably 80% to 90%, of a poly(ethylene terephthalate) resin having an intrinsic viscosity of from 0.7 to 1.1 dl./g.;
b. from 4 to 29%, preferably from 5 to 10%, of a core/shell polymer having
   1. from 60 to 90% of a first elastomeric stage polymerised from a monomer system comprising
      a. at least 75% of a C₂-C₈ alkyl acrylate, preferably butyl acrylate, or of butadiene;
      b. optionally up to 5% of a crosslinking monomer containing at least two polymerisable double bonds of equal reactivity,
      c. optionally up to 5% of a graftlinking monomer containing at least two polymerisable double bonds of unequal reactivity.
   2. from 10 to 40 parts of a final rigid stage polymerised from a monomer system comprising at least 55% of an alkyl methacrylate wherein the alkyl group has from 1 to 4 carbon atoms;
   3. optionally up to 5 weight percent of an inorganic nucleating agent, such as talc; and
      c. from 1 to 8 % of an aromatic polycarbonate, preferably bis-phenol-A polycarbonate;
      d. from 1 to 5 % of linear low density polyethylene (LLDPE); and
      e. from 0.5 to 1 %, based on the weight of the LLDPE, of at least one of a hindered phenol antioxidant or an sulphur-containing ester stabilizer .

It is separately preferred that (a) the cross-linking monomer is an alkylene glycol diacrylate or a polyol triacrylate; (b)that the graftlinking monomer is diallyl maleate or allyl methacrylate; (c) that the inorganic nucleating agent is talc. It is further separately preferred that (d) the amount of the poly(ethylene terephthalate) resin is from 80 to 90 %; (e) the amount of core/shell polymer is from 5 to 10 %; (f) the polycarbonate is bisphenol A polycarbonate. It is further separately preferred that (g) the hindered phenol antioxidant contains two t-alkyl groups adjacent to the phenolic oxygen, and especially preferred that the hindered phenol antioxidant is tetrakis(methylene (3,5-di-t-butyl-4-hydroxyhydrocinnamate)) methane. It is further separately preferred that (h) the sulphur-containing ester is a thiopropionate or a thiodipropionate, and especially preferred that the sulphur-containing ester is pentaerythritol beta-lauryl thiopropionate or dilauryl thiodipropionate.

Preferably the core/shell polymer contains from about 10 to about 40 parts of a second rigid stage polymerised from a monomer system comprising essentially 100% of methyl methacrylate. The core/shell polymer may have intermediate stages consisting of polymers derived from styrene and/or methyl methacrylate.

The invention further relates to the above compositions in the form of a rapidly-crystallizing sheet or molding. Further, the invention relates to a process for producing an extrudate of a toughened poly(ethylene terephthalate) comprising treating an admixture of similar materials in an extruder or other mixing device, but then passing the melt through an extruder die or die-lips to form a sheet, then optionally passing the sheet through shaping equipment, thermoforming dies, or onto calender rolls to form a finished shaped object wherein the extruded shaped object exhibits less plate-out than an object molded similarly from the described formulation absent the phenolic antioxidant component (e). All percentages are by weight and based on 100 parts of the composition or of the core/shell polymer, respectively.

By PET is meant condensation polymers formed by the reaction of ethylene glycol with terephthalic acid or a dialkyl terephthalate. Further are included copolymers containing small amounts of other glycols, such as propylene glycol, 1,4-butylene glycol, cyclohexane-1,4-dimethanol and the like, or of units derived from other related diacids, such as isophthalic acid, 2,6-napthalene dicarboxylic acid, and the like. One of ordinary skill in the art may readily select those copolymers which have a sufficiently high crystallization rate (related to PET "homopolymer") to be useful in forming crystallized molded or extruded articles.

The core/shell impact modifier of the invention is of a type well-known to the art. Normally the modifier is formed in emulsion from a core polymer of an alkyl acrylate, such as butyl acrylate, 2-ethylhexyl acrylate, and the like, usually containing a crosslinking monomer, which has at least two double bonds which are reactive with the butadiene or alkyl acrylate and of equivalent reactivity, such as a glycol di(meth)acrylate, a glycol diacrylate, a polyol tri(meth)acrylate, divinylbenzene, or the like to retain the dimensions of the core during processing and to increase the impact strength, and a graftlinking monomer, having at least two double bonds of unequal reactivity, such as diallyl maleate, allyl (meth)acrylate, trisallyl cyanurate, and the like, to leave double bonds available for attachment of the later-polymerised shell to the core, thus improving the dispersion of the rubbery core in the matrix polymer. Typical of such core-shell polymers are those disclosed in Fromuth et al., U. S. 4,264, 487.

The distinction between graftlinking monomers and crosslinking monomers may not be clean-cut, depending on relative reactivities of double bonds of these monomers with various core and shell monomers, and on the extent of conversion. Thus, in some instances, a crosslinking monomer may participate in grafting reactions, and a graftlinking monomer may cause the core to become crosslinked.

When polymers based on butadiene-rich cores are utilized, the presence of a graft-linking monomer is usually unnecessary. Cross-linking monomers may be utilized. Useful for the present purpose are homopolymers of butadiene, or copolymers of butadiene with up to 25% of co-monomers such as styrene, butyl acrylate, acrylonitrile, and the like. Typical of such core-shell polymers are those disclosed in Fromuth et al., U. S. 4,180,494. The plate-out effect is more pronounced with butyl acrylate-based modifiers than with butadiene-based core/shell modifiers, although the acrylate-based core/shell modifiers have other merits, such as improved thermal stability, which merits their use.

The outer shell of the core/shell modifier may be a rigid polymer, that is, one with a glass temperature (as an isolated polymer apart from the core) of above room temperature. The shell will contain at least 55% of at least one alkyl methacrylate wherein the alkyl group is from 1 to 4 carbon atoms, such as methyl, ethyl, propyl, or butyl. Other co-monomers may be present, such as styrene, an alkyl acrylate, an aryl (meth)acrylate, (meth)acrylic acid, and the like. Preferred for ease of isolation of the resulting core/shell modifier, is an outer stage or shell polymer of methyl methacrylate homopolymer.

The rubbery core should be present as from about 60% to about 90% of the total core/shell polymer. The outer shell should comprise from about 10 to about 40 parts of the core/shell modifier. Intermediate shells, either rubbery or hard, may also be present. A butadiene/ /styrene/ /methyl methacrylate "three-stage" polymer such as taught in Ferry et al., U. S. 3,985,704, may be utilized in the present invention.

Since the core/shell polymer is separately isolated prior to forming the blend, such as by spray-drying, coagulation, and the like, it is convenient at that time to add the nucleating and also sufficient thermal/oxidative stabilizer for the core/shell polymer to stabilize the core/shell modifier during isolation, especially as some thermal/oxidative stabilizer is generally required to protect the core/shell polymer. Core-shell polymers based on butadiene especially require such stabilization. The amount utilized to stabilize the core/shell polymer during isolation is insufficient to prevent plate-out or is of a type insufficient to prevent plate-out.

Although the linear low density polyethylene or other related polyethylene will function as a nucleator, other nucleators may optionally be added, depending on the exact processing conditions to be used. Useful nucleators are inorganic compounds, such as talc, functionalized alumina, organic salts such as sodium salicylate, or certain organic polymers, such as poly(butylene terephthalate), certain other polyolefins, polyamides, and the like.

Thermal/oxidative stabilizers for the core/shell modifiers are of several types: (a) organic phosphites, such as triphenyl phosphite, tris(nonylphenyl) phosphite, and the like, or other phosphorous-acid based derivatives, such as taught in U.S. Patent 3,953,539; (b) organic sulphur compounds, such as dilauryl thiodipropionate, pentaerythritol tetra(thiodipropionate), alkyl esters of thioglycolic acid, and the like; (c) phenolic antioxidants based on hindered phenols, such as 2,6-di-t-butyl-4-methylphenol, octadecyl (3',5'-di-t-butyl-4'-hydroxyhydrocinnamate, and the like; (d) combinations, such as molecules containing both a hindered phenol and an S-alkylated thioester group. The stabilizers may also include a component, such as a trisaryl phosphite, which will prevent transesterfication reactions between the polyester and the polycarbonate.

As refers to the present invention, the antioxidants or stabilizers are at least one of a hindered phenol and /or a sulphur-containing polyester. Preferred as being particularly effective as an antioxidant for stabilization of the LLDPE are phenolic antioxidants based on hindered phenols, such as the condensate of 3-methyl-6-t-butylphenol with crotonaldehyde, 2,6-di-t-butyl-4-methylphenol, octadecyl (3',5'-di-t-butyl-4'-hydroxyhydrocinnamate, tetrakis(methylene (3,5-di-t-butyl-4-hydroxyhydrocinnamate)) methane, and the like. Preferred are the hindered phenols with two t-butyl groups adjacent to the phenolic oxygen. Especially preferred is tetrakis(methylene (3,5-di-t-butyl-4-hydroxyhydrocinnamate)) methane, for its non-volatility in the processing operations.

The sulphur compounds are esters, such as acetates, propionates, and the like of alcohols, such as lauryl alcohol and the like, or polyols, such as pentaerythritol and the like. They further contain sulphur in a sulphide or disulphide form. Preferred are pentaerythritol beta-lauryl thiopropionate or dilauryl thiodipropionate. The sulphur-containing stabilizers and the phenolic antioxidants may be used singly or in combination.

The antioxidant is present at a amount of from 0.5 to 1 % based on the amount of LLDPE present. This anti-oxidant may preferably be admixed with the LLDPE prior to blending, or may be pre-compounded with a small amount of PET, then added in the blending operation.

The polycarbonate of the invention is normally bisphenol A polycarbonate, but other known polycarbonates, such as those based on bisphenol S, may be used.

The blend of the present invention may further contain other impact modifiers, reinforcing fillers, lubricants, dyes, pigments, and the like. Such may be combined prior to melt-processing and/or during the melt-processing operation.

The blend may be melt-processed in conventional blending or moulding equipment. It may be pre-pelletized by conventional extrusion/pelletization techniques and then re-molded or re-extruded by the ultimate user to form the desired object. Alternatively, the pre-mixed blend of ingredients may be melt-mixed and molded or extruded in one operation.

The blend may be molded into useful tough objects of good surface, for use in such applications as computer and business machine housings, automotive parts, and the like. It may also be extruded or molded into food containers which will exhibit sufficient toughness to be frozen and sufficient heat stability to be used in warming operations, such as in a microwave oven. Extruded sheets will exhibit good thermoformability, so they can be readily shaped by conventional thermoforming techniques into trays, containers, and the like.

Quantification of plate-out is difficult, and it may be necessary to rely on comparative experiments and the judgment of an experienced operator. Plate-out is a visual observation, either seen as a film on the mould surfaces or as defects in the molded object, and one test requires establishment of equilibrium moulding conditions with a particular formulation and then a measurement of the number of moldings which can be made from various formulations before the mould must be cleaned. For extrudates, plate-out is usually observed at a die or at a pinch point, such as at a thermoforming roll or rolls, or orifice contacted by the warm or molten polymer. Buildup at thermoforming rolls is the most common observation, and again can be observed but not easily quantified, except the time the formulation can be run before re-cleaning is required. Surface gloss after a number of cycles or a set time of extrusion may also be employed.

Another approximation of whether plate-out will occur in a commercial operation is to prepare the blend to be tested in the form of extruded pellets, and then injection mould into a very hot mold, such as 140 - 150 °C. If plate-out is to be a problem in conventional molding/thermoforming equipment, plate-out will be seen on parts prepared in this "accelerated" moulding test (but not in the mould itself) after ten cycles or less, whereas a commercially acceptable blend as regards plate-out can be molded for at least 30 or 35 cycles before plate-out on the molded part is seen.

### EXAMPLES

### EXAMPLE 1

A blend of poly(ethylene terephthalate) 89.75 %, linear low density polyethylene 3.09%, talc 0.16 % , and 8 % of a composite of 74. 5 parts of a butyl acrylate// methyl methacrylate core/shell impact modifier as described in Example 32 of U. S. Patent 4,096,202, 5 parts of antioxidants ( 3 parts organophopshite tarnsesterification inhibitor, 1.1 parts of AntiOxidant B, and 0.9 parts Stabilizer D, both described in Example II), and 19 parts of polycarbonate was prepared commercially and processed into thermoformable trays. The process produces about 60 % of scrap which must be reprocessed for a commercially acceptable operation. The extent of plate-out was commercially unacceptable. In the final blend, the amount of antioxidants added with the acrylic additive is believed to be about 0.4 %.

When using the "hot injection mold" plate-out test described above on the commercial "regrind", the formulation also behaved poorly in that laboratory test, confirming the suitability of the laboratory test for predicting commercial "plate-out" problems.

Several anti-oxidants were milled into the regrind and the plate-out behavior determined. Here the amount of stabilizer and/or antioxidant is based on the total amount of regrind. Stabilizer A (Seenox) is pentaerythritol beta-lauryl thiopropionate ; Antioxidant B (Irganox 1010) is tetrakis(methylene (3,5-di-t-butyl-4-hydroxyhydrocinnamate)) methane; Antioxidant C (Topanol CA) is a condensate of 3-methyl-6-t-butylphenol with crotonaldehyde; Stabilizer D is dilauryl thiodipropionate.

**Table I**

| Hot mould tests on modified regrind | | | | | | |
|---|---|---|---|---|---|---|
| COMPONENTS | A | B | C | D | E | F |
| Regrind | 100 | 100 | 100 | 100 | 100 | 100 |
| Stab. A | | 0.1 | 0.2 | 0.1 | | 0.12 |
| AO B | | 0.04 | 0.08 | | 0.04 | 0.04 |
| AO C | | 0.04 | 0.08 | | 0.04 | 0.04 |
| Stab. D | | 0.1 | 0.2 | 0.1 | | |
| | | | | | | |
| Rating | POOR | GOOD | FAIR to MODERATE | GOOD | MODERATE to GOOD | GOOD |

It can be seen that several combinations of stabilizers are effective in lowering plate-out, but use of an excess amount may lead to some plate-out, probably from the stabilizer or anti-oxidant itself.

### EXAMPLE II

This experiment shows the effect of a single anti-oxidant, present at 0.08/ 8 = 1 % based on the LLDPE in the composition. As 100 % regrind gave extremely poor plate-out, due to decomposition of the LLDPE, the effect was followed in various blends,

**Table II**

| Hot mould tests on virgin PET/regrind blends with added antioxidant | | | | |
|---|---|---|---|---|
| COMPONENTS | A | B | C | D |
| Regrind | | 20 | 30 | 40 |
| Virgin PET | 100 | 80 | 70 | 60 |
| LLDPE | 3 | 3 | 3 | 3 |
| Acrylic Additive | 8 | 8 | 8 | 8 |
| Antiox. B (as 10% blend in virgin PET) | 0.08 | 0.08 | 0.08 | 0.08 |
| | | | | |
| Rating | GOOD | MODERATE TO GOOD | MODERATE | MODERATE TO POOR |

### EXAMPLE III

A recommended formulation to avoid plate-out in commercial equipment is:

| COMPONENTS | |
|---|---|
| Virgin PET | 80 - 100 |
| Regrind PET | 0 - 20 |
| LLPDE | 3 |
| Acrylic Additive | 8 |
| Antiox. B (as 10% pre-blend in virgin PET) | 0.08 |
| | |
| Stab. D (as 10% pre-blend in virgin PET | 0.16 |

A trial was actually made with 100 % regrind of the PET formulation described in Example 1 (which already contained the LLDPE and Acrylic Additive). When no further additives were combined, the formulation could be run for only 20 minutes without plate-out occuring; when 0.08% of Anti-Oxidant B and 0.16 % of Stabilizer D were added, the process could be run for several hours without having to stop to remove plate-out.

## Claims

1. A rapid-crystallizing, modified polyester resin composition exhibiting low plate-out on repeated thermal processing, comprising:
a. from 70 to 94 % of the total blend of a poly(ethylene terephthalate) resin having an intrinsic viscosity of from 0.7 to 1.1 dl./g.;
b. from 4 to 29% of a core/shell polymer having
1. from 60 to 90% of a first elastomeric stage polymerised from a monomer system comprising
a. at least 75% of a C₂-C₈ alkyl acrylate or of butadiene;
b. optionally up to 5% of a crosslinking monomer containing at least two polymerisable double bonds of equal reactivity;
c. optionally up to 5% of a graftlinking monomer containing at least two polymerisable double bonds of unequal reactivity.
2. from 10 to 40 parts of a final rigid stage polymerised from a monomer system comprising at least 55% of an alkyl methacrylate wherein the alkyl group has from 1 to 4 carbon atoms;
3. optionally up to 5 weight percent of an inorganic nucleating agent, such as talc; and
c. from 1 to 8 % of an aromatic polycarbonate;
d. from 1 to 5 % of linear low density polyethylene (LLDPE); and
e. from 0.5 to 1 %, based on the weight of the LLDPE, of at least one of a hindered phenol antioxidant or an sulphur-containing ester stabilizer .

2. The composition of Claim 1 wherein the hindered phenol antioxidant contains two t-alkyl groups adjacent to the phenolic oxygen.

3. The composition of Claim 1 or 2 wherein the sulphur-containing ester contains a sulphide or disulphide group.

4. The composition of any preceding claim wherein the C₂-C₈ alkyl acrylate is butyl acrylate.

5. The composition of any preceding claim wherein the cross-linking monomer is an alkylene glycol diacrylate or a polyol triacrylate.

6. The composition of any preceding claim wherein the graftlinking monomer is diallyl maleate or allyl methacrylate.

7. The composition of any preceding claim wherein the inorganic nucleating agent is talc.

8. The composition of any preceding claim wherein the hindered phenol antioxidant is a condensate of 3-methyl-6-t-butylphenol with crotonaldehyde or is tetrakis(methylene (3,5-di-t-butyl-4-hydroxyhydrocinnamate)) methane.

9. The composition of any preceding claim wherein the sulphur-containing ester is a thiopropionate or a thiodipropionate, preferably pentaerythritol beta-lauryl thiopropionate or dilauryl thiodipropionate.

10. The composition of any preceding claim wherein the poly(ethylene terephthalate) is from 80 to 90 % of the blend and the core/shell polymer is from 5 to 10 % of the blend.
